(19) **Europäisches Patentamt**
**European Patent Office**
**Office européen des brevets**

(11) Veröffentlichungsnummer : **0 128 477**
**B1**

(12) **EUROPÄISCHE PATENTSCHRIFT**

(45) Veröffentlichungstag der Patentschrift :
25.03.87

(51) Int. Cl.⁴ : **F 16 H   1/445**

(21) Anmeldenummer : **84106256.5**

(22) Anmeldetag : **01.06.84**

(54) **Regelsystem für eine Differentialsperre.**

(30) Priorität : **13.06.83 US 503968**

(43) Veröffentlichungstag der Anmeldung :
**19.12.84 Patentblatt 84/51**

(45) Bekanntmachung des Hinweises auf die Patenterteilung : **25.03.87 Patentblatt 87/13**

(84) Benannte Vertragsstaaten :
**DE FR GB**

(56) Entgegenhaltungen :
EP-A- 0 063 432
WO-A-81 /020 49
WO-A-81 /021 88
GB-A- 2 067 685
US-A- 2 874 790
US-A- 2 894 416
US-A- 3 400 610
US-A- 3 732 752
US-A- 4 218 938
US-A- 4 263 824
US-A- 4 347 760

(73) Patentinhaber : **DEERE & COMPANY**
**1 John Deere Road**
**Moline Illinois 61265 (US)**

(72) Erfinder : **Kittle, Carl Edwin**
**2312 Primrose**
**Cedar Falls Iowa 50613 (US)**

(74) Vertreter : **Gramm, Werner, Prof. Dipl.-Ing. et al**
**Patentanwälte Gramm + Lins Theodor-Heuss-
Strasse 2**
**D-3300 Braunschweig (DE)**

Jouve, 18, rue St-Denis, 75001 Paris, France

**Beschreibung**

Die Erfindung betrifft ein Regelsystem für eine Differentialsperre in einem mit zumindest einem Ausgleichsgetriebe ausgestatteten Fahrzeug, mit einer manuell betätigbaren Einrichtung zur Sperrung bzw. Entsperrung des Ausgleichsgetriebes und mit einer ersten Steuereinheit, die auf Signale zumindest einer Fahrzeugfunktion anspricht und das Ausgleichsgetriebe bei Anzeige bzw. Überschreiten eines für diese Fahrzeugfunktion vorgegebenen Wertes automatisch entsperrt.

Eine derartige Ausführungsform läßt sich dem US-Patent 2 874 790 entnehmen. Das meist bei Breitspur-Schleppern angewandte Regelsystem sieht vor, das Ausgleichsgetriebe in Abhängigkeit von der Betätigung der linken oder rechten Bremse zu entsperren, da die Bremsen häufig zur Unterstützung beim Drehen des Breitspur-Schleppers benutzt werden. Die genannte Druckschrift offenbart ferner eine Lösung, wonach die Steuerung der Differentialsperre in Abhängigkeit eines Relativwinkels zwischen mechanischen Teilen der Schleppersteuerung erfolgt. Der für dieses System vorgesehene, auf Lenkungswinkel ansprechende Schalter kann das Ausgleichsgetriebe sowohl sperren als auch entsperren.

Gemäß einem anderweitig bekanntgewordenen Regelsystem wird ein solenoid-betätigtes Differentialsperren-Steuerventil über einen einzigen manuell betätigten Fußbodenschalter gesteuert. Bei diesem System muß aber der Fahrer des Fahrzeuges ständig den Bodenschalter niederdrücken, um das Ausgleichsgetriebe gesperrt zu halten. Sowohl bei Breitspur-Schleppern als auch bei vierradangetriebenen Traktoren mit Differentialsperren kann aber ein gesperrtes Ausgleichsgetriebe die Lenkung des Schleppers stören.

Der Erfindung liegt die Aufgabe zugrunde, das eingangs erläuterte Regelsystem so abzuwandeln, daß in bestimmten Situationen eine automatische Sperrung bzw. Entsperrung des Ausgleichsgetriebes erfolgt, zugleich aber eine ungewollte Sperrung bzw. Entsperrung des Ausgleichsgetriebes verhindert wird.

Diese Aufgabe wird gemäß der Erfindung dadurch gelöst, daß die erste Steuereinheit ausschließlich eine Entsperrung nicht aber eine Sperrung des Ausgleichsgetriebes vornehmen kann, und daß eine zweite Steuereinheit auf Signale zumindest einer weiteren Fahrzeugfunktion anspricht und bei Überschreiten eines für diese Fahrzeugfunktion vorgegebenen Wertes das entsperrte Ausgleichsgetriebe automatisch sperrt, soweit die Fahrzeugfunktionen der ersten Steuereinheit kein Signal zur automatischen Entsperrung erzeugen, wobei die Schaltung der zweiten Steuereinheit die Entsperrung eines zuvor gesperrten Ausgleichsgetriebes nicht zuläßt.

Dabei ist es vorteilhaft, wenn die erste Steuereinheit auf eine Betätigung einer Fahrzeugbremse und die zweite Steuereinheit auf eine vorgegebene Bedingung eines Lenkungssystems des Fahrzeuges ansprechen. Zusätzlich können die erste Steuereinheit auch noch auf die Fahrzeuggeschwindigkeit und die zweite Steuereinheit auf das Rutschen eines Fahrzeugrades und/oder auf die auf das Fahrzeug ausgeübten Zugkräfte ansprechen.

Das erfindungsgemäße Regelsystem weist eine über ein Solenoidventil hydraulisch betätigte Differentialsperre auf. Die Erregung des Solenoidventils erfolgt über einen Steuerkreis, der ein normalerweise geöffnetes Stromstoßrelais und in Reihe geschaltete Schalter aufweist, die öffnen und das Ausgleichsgetriebe entsperren in Abhängigkeit der gemessenen Fahrzeuggeschwindigkeit und einer Bremsbetätigung. Das Ausgleichsgetriebe kann gesperrt werden durch Schließen eines normalerweise geöffneten kurzzeitigen Kontaktschalters. Ein Mehrfach-Relais-Schaltkreis ist an das genannte Stromstoßrelais angeschlossen und kann automatisch das Ausgleichsgetriebe wieder sperren, wenn bestimmte die Fahrzeugfunktionen, wie z. B. Lenkungsdruck, Radrutschen und Zugkraft, betreffende Konditionen vorliegen.

Weitere Merkmale der Erfindung sind Gegenstand der Unteransprüche und werden anhand eines Ausführungsbeispieles näher erläutert.

In der Zeichnung ist eine als Beispiel dienende Ausführungsform der Erfindung dargestellt. Es zeigen:

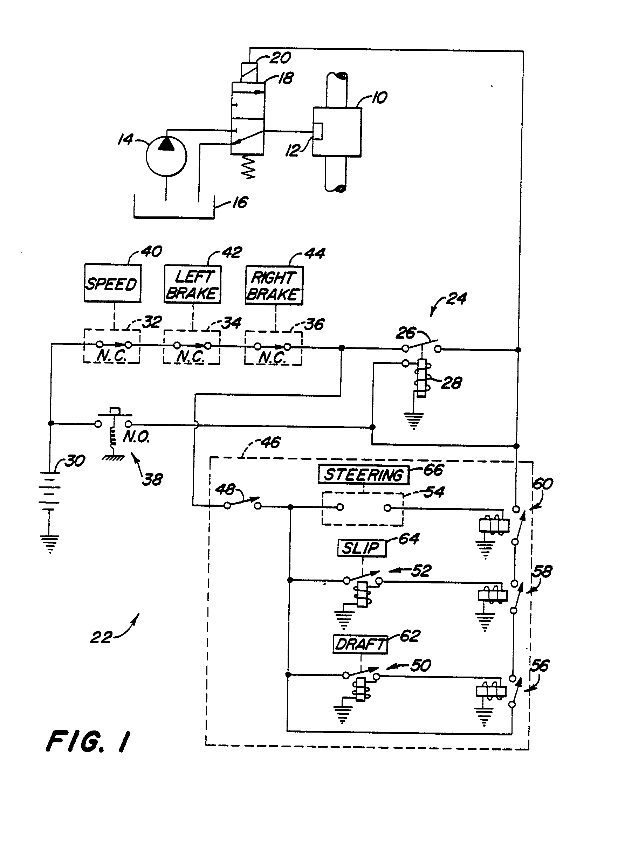

Figur 1 ein vereinfachtes schematisches Diagramm eines Regelsystems für eine Differentialsperre und

Figur 2 ein schematisches Diagramm einer lenkungsabhängigen Schaltung.

Das Getriebe eines landwirtschaftlichen Schleppers umfaßt ein Differential- bzw. Ausgleichsgetriebe 10 mit einer üblichen, hydraulisch betätigten Differentialsperre 12, wie sie z. B. im US-Patent 3 292 720 beschrieben ist. Der Flüssigkeitsaustausch zwischen der Differentialsperre 12, einer Pumpe 14 und einem Reservoir 16 wird über ein solenoidbetätigtes Zwei-Wege-Ventil (Zwei-Stellungs-Ventil) 18 gesteuert. Das Solenoid 20 des Ventils 18 wird durch einen Differentialsperren-Regelkreis 22 gesteuert.

Der Regelkreis 22 weist ein Stromstoßrelais 24 (Hauptrelais) auf, dessen normalerweise geöffneter Relaisschalter 26 durch Erregung einer Spule 28 geschlossen werden kann. In Reihe geschaltete, normalerweise geschlossene Schalter 32, 34 und 36 sind zwischen die eine Seite des Schalters 26 sowie eine Spannungsquelle oder Batterie 30 geschaltet. Ein vom Fahrer zu betätigender, normalerweise geöffneter kurzzeitiger Kontaktschalter 38 ist vorzugsweise im Armaturenbrett angeordnet und zwischen die Batterie 30 und die Relaisspule 28 geschaltet. Die andere Seite des Schalters 26 ist an die Relaisspule 28 angeschlossen.

Der Schalter 32 kann in Wirkverbindung stehen mit einem Fahrzeuggeschwindigkeitssensor 40, so daß der Schalter 32 dann öffnet, wenn die Fahrzeuggeschwindigkeit einen bestimmten vorgegebenen Wert, z. B. 11 kmh, überschreitet.

Die Schalter 34 und 36 werden beaufschlagt durch Betätigung der linken und rechten Bremsen 42, 44, wie es z. B. im US-Patent 2 874-790 beschrieben ist.

Der Steuerkreis 22 weist ferner einen Unterschaltkreis oder ein Mehrfachrelais 46 auf, das parallel zum Relaisschalter 26 liegt und einen manuell zu betätigenden An-Aus-Schalter 48 aufweist, der mit seiner einen Seite zwischen die Schalter 36 und 26 geschaltet und mit seiner anderen Seite an die eine Seite von normalerweise geöffneten, von Fahrzeugfunktionen gesteuerte Stromstoßrelais 50, 52 sowie an einen Relaiskreis 54 angeschlossen ist. Normalerweise offene Stromstoßrelais 56, 58 und 60 weisen Schalter auf, die in Reihe zwischen Schalter 48 und Hauptrelais 24 geschaltet sind.

Das Relais 50 wird von einem Zugkraftsensor 62 beaufschlagt, so daß die Relais 50 und 56 immer dann geschlossen werden, wenn die gemessene Zugkraft größer ist als ein vorgegebener Schwellenwert, z. B. 10 kN.

Das Relais 52 wird von einem das Rutschen der Fahrzeugräder messenden Sensor 64 beaufschlagt, so daß die Relais 52 und 58 immer dann schließen, wenn das Rutschen eines angetriebenen Fahrzeugrades einen bestimmten Wert, z. B. 5 %, übersteigt.

Das Relais 54 ist an ein Fahrzeuglenkungssystem 66 angeschlossen, so daß das Relais 60 immer dann schließt, wenn im Fahrzeuglenkungssystem eine bestimmte Kondition auftritt.

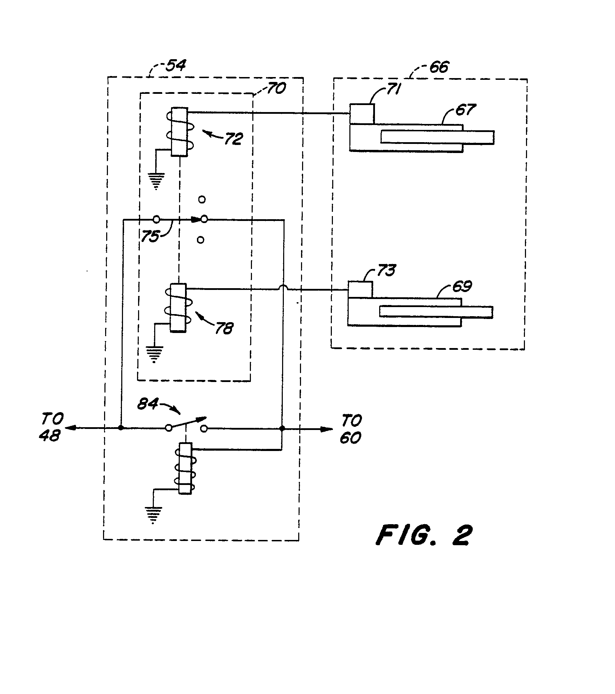

Gemäß Figur 2 weist das Fahrzeuglenkungssystem 66 einen linken und rechten, hydraulisch betätigten Lenkungsantrieb 67 und 69 sowie entsprechende Flüssigkeitsdrucksensoren 71 und 73 auf. Der Relaiskreis 54 umfaßt ein normalerweise geschlossenes zweifach-solenoidgesteuertes Relais 70 sowie ein normalerweise geöffnetes Stromstoßrelais 84. Ein Solenoid 72 wird vorzugsweise erregt durch einen Drucksensor 71, wenn der hydraulische Arbeitsdruck im Lenkungsantrieb 67 eine bestimmte Grenze übersteigt. In gleicher Weise ist ein Solenoid 78 vorzugsweise erregt durch den Drucksensor 73, wenn der Druck im Lenkungsantrieb 69 den gleichen Wert übersteigt. Deshalb wird der Relaisschalter 75 immer dann geschlossen, wenn der Druck in den Lenkungsantrieben 67 und 69 gegenseitig im wesentlichen ausgeglichen ist, wie es der Fall ist, wenn nur ein geringer Kraftaufwand zum Lenken des Fahrzeuges erforderlich ist. Das Schließen des Schalters 75 bewirkt ein Schließen des normalerweise offenen Stromstoßrelais 84, wodurch Relais 60 geschlossen ist.

Der Arbeitsablauf ist wie folgt : Ein ungesperrtes Ausgleichsgetriebe kann durch kurzzeitiges Schließen des Schalters 38 gesperrt werden. Dadurch wird die Batterie 30 an die Solenoidspule 28 angeschlossen, das Relais 24 schließt, so daß das Solenoid 20 über die normalerweise geschlossenen Schalter 32, 34 oder 36 auch dann erregt bleibt, nachdem der Schalter 38 wieder geöffnet ist. Dadurch wird Ventil 18 unter Druck gesetzt und sperrt die Differentialsperre 12 in an sich bekannter Weise.

Wird eine Fahrzeuggeschwindigkeit von 11 kmh überschritten, oder wird eine der beiden linken oder rechten Bremsen 42, 44 betätigt (z. B. zur Unterstützung der Lenkung), dann öffnen die entsprechenden Schalter 32 bis 36, machen das Solenoid 20 stromlos, öffnen Relais 24 und entsperren die Differentialsperre 12. Es sollte aber beachtet werden, daß bei geöffnetem Relais 24 die Schalter 32 bis 36 dieses Relais 24 nicht schließen können, da sie die Relaisspule 28 nicht wieder erregen können. Die Schalter 32 bis 36 können daher das Ausgleichsgetriebe 10 lediglich entsperren, sie lassen sich aber nicht betätigen, um das Ausgleichsgetriebe 10 zu sperren.

Ist der Schalter 48 durch die Bedienungsperson geschlossen worden und sind die Schalter 32 bis 36 wieder geschlossen, dann kann der Unterschaltkreis 46 das Relais 24 automatisch wieder schließen und somit die Differentialsperre 12 wieder sperren, jedoch nur dann, wenn die Relais 56, 58 und 60 gleichzeitig geschlossen sind. Dies ist nur dann der Fall, wenn die folgenden Bedingungen gleichzeitig eintreten :

1. Die Zugkraft ist größer als 10 kN ;
2. der Radschlupf ist kleiner als 5 % ; und
3. der Lenkungsdruck in den Antrieben 67 und 69 ist angenähert gleich.

Es sollte beachtet werden, daß das Öffnen oder Schließen der Relais 56, 58 und 60 dann ohne Effekt bleibt, nachdem Relais 24 einmal geschlossen ist und das Ausgleichsgetriebe 10 gesperrt wurde. Somit kann also der Unterschaltkreis 46 das Ausgleichsgetriebe 10 lediglich automatisch wieder sperren, ist jedoch nicht in der Lage, das Ausgleichsgetriebe zu entsperren. Ferner ist zu beachten, daß die Bedienungsperson durch Öffnen des Schalters 48 verhindern kann, daß der Unterschaltkreis 46 das Ausgleichsgetriebe automatisch wieder sperrt.

## Patentansprüche

1. Regelsystem (22) für eine Differentialsperre (12) in einem mit zumindest einem Ausgleichsgetriebe (10) ausgestatteten Fahrzeug, mit einer manuell betätigbaren Einrichtung zur Sperrung bzw. Entsperrung des Ausgleichsgetriebes (10) und mit einer ersten Steuereinheit (24-44), die auf Signale zumindest einer Fahrzeugfunktion (40-44) anspricht und das Ausgleichsgetriebe (10) bei Anzeige bzw. Überschreiten eines für diese Fahrzeugfunktion (40-44) vorgegebenen Wertes automatisch entsperrt, dadurch gekennzeichnet, daß die erste Steuereinheit (24-44) ausschließlich eine Entsperrung nicht aber eine Sperrung des Ausgleichsgetriebes (10) vornehmen kann, und daß eine zweite Steuereinheit (46) auf Signale zumindest einer weiteren Fahrzeugfunktion (62-66) anspricht und bei Überschreiten eines für diese Fahrzeugfunktion (62-66) vorgegebenen Wertes das entsperrte Ausgleichsgetriebe (10) automatisch sperrt, soweit die Fahrzeugfunktionen der ersten Steuereinheit (24-44) kein Signal zur automatischen Entsperrung erzeugen, wobei die Schaltung der zweiten Steuereinheit (46) die Entsperrung eines zuvor gesperrten Ausgleichsgetriebes (10) nicht zuläßt.

2. Regelsystem nach Anspruch 1, dadurch gekennzeichnet, daß die erste Steuereinheit (24-44) auf eine Betätigung einer Fahrzeugbremse (42, 44) anspricht und bei Bremsung des Fahrzeuges die Differentialsperre (12) für das Ausgleichsgetriebe (10) löst.

3. Regelsystem nach Anspruch 1 oder 2, dadurch gekennzeichnet, daß die erste Steuereinheit (24-44) auf die Fahrzeuggeschwindigkeit (40) anspricht und bei Überschreiten einer vorgegebenen Geschwindigkeit die Differentialsperre (12) für das Ausgleichsgetriebe (10) löst.

4. Regelsystem nach einem der vorhergehenden Ansprüche, gekennzeichnet durch ein zwischen eine Spannungsquelle (30) und die Differentialsperre (12) geschaltetes Hauptrelais (24) mit einem normalerweise geöffneten Relaisschalter (26), dessen Schließung die Differentialsperre (12) beaufschlagt, die daraufhin das Ausgleichsgetriebe (10) sperrt.

5. Regelsystem nach Anspruch 4, dadurch gekennzeichnet, daß zwischen Spannungsquelle (30) und Hauptrelais (24) ein manuell zu betätigender, normalerweise offener kurzzeitiger Kontaktschalter (38) geschaltet ist, durch dessen Schließung nur eine Sperrung des Ausgleichsgetriebes (10) durch die Differentialsperre (12) erfolgt.

6. Regelsystem nach Anspruch 4 oder 5, dadurch gekennzeichnet, daß für jede Fahrzeugfunktion (40-44), auf die die erste Steuereinheit (24-44) anspricht, ein Sensor (40, 42, 44) vorgesehen ist, der einen ihm zugeordneten Schalter (32, 34, 36) beaufschlagt, wobei diese normalerweise geschlossenen Schalter (32, 34, 36) in Reihe zwischen die Spannungsquelle (30) und das Hauptrelais (24) geschaltet sind.

7. Regelsystem nach einem der vorhergehenden Ansprüche, dadurch gekennzeichnet, daß die zweite Steuereinheit (46) auf eine vorgegebene Bedingung eines Lenkungssystems (66) des Fahrzeuges anspricht.

8. Regelsystem nach Anspruch 4 und 7, dadurch gekennzeichnet, daß die zweite Steuereinheit (46) einen auf die Lenkung ansprechenden Schalter (60) aufweist, der zwischen Spannungsquelle (30) und Hauptrelais (24) geschaltet ist und beim Ansprechen auf die vorgegebene Bedingung nur den Relaisschalter (26) schließt, wobei die Differentialsperre (12) das Ausgleichsgetriebe (10) nur dann sperrt, wenn sie an die Spannungsquelle (30) angeschlossen ist.

9. Regelsystem nach Anspruch 8, dadurch gekennzeichnet, daß zwischen Spannungsquelle (30) und dem auf die Lenkung ansprechenden Schalter (60) ein manuell zu betätigender Ein-Aus-Schalter (48) geschaltet ist, durch dessen Betätigung ein Schließen des Relaisschalters (26) als Folge der Betätigung des auf die Lenkung ansprechenden Schalters (60) verhindert wird.

10. Regelsystem nach einem der vorhergehenden Ansprüche, dadurch gekennzeichnet, daß die zweite Steuereinheit (46) auf das Rutschen eines Fahrzeugrades anspricht.

11. Regelsystem nach Anspruch 8 und 10, dadurch gekennzeichnet, daß die zweite Steuereinheit (46) einen Rutschsensor (64) für die Fahrzeugräder sowie einen auf Rutschen ansprechenden Schalter (58) aufweist, der mit dem auf die Lenkung ansprechenden Schalter (60) in Reihe geschaltet ist und bei Betätigung eine Sperrung des Ausgleichsgetriebes (10) verhindert, wenn das gemessene Radrutschen geringer ist als ein vorgegebener Wert.

12. Regelsystem nach einem der vorhergehenden Ansprüche, dadurch gekennzeichnet, daß die zweite Steuereinheit (46) auf Zugkräfte anspricht, die auf das Fahrzeug ausgeübt werden.

13. Regelsystem nach Anspruch 11 und 12, dadurch gekennzeichnet, daß die zweite Steuereinheit (46) einen Zugkraftsensor (62) sowie einen auf Zugkräfte ansprechenden Schalter (56) aufweist, der mit den auf die Lenkung sowie auf das Rutschen ansprechenden Schaltern (60, 58) in Reihe geschaltet ist und bei Betätigung eine Sperrung des Ausgleichsgetriebes (10) verhindert, wenn die gemessene Zugkraft unter einem vorgegebenen Wert liegt.

14. Regelsystem nach einem der vorhergehenden Ansprüche, dadurch gekennzeichnet, daß die zweite Steuereinheit (46) Drucksensoren (71, 73) aufweist, die Flüssigkeitsdrücke im hydraulischen Lenkungssystem (66) des Fahrzeuges messen und mit Steuerelementen (72, 78) verbunden sind, die ihrerseits mit der Differentialsperre (12) verbunden sind und das Ausgleichsgetriebe (10) dann sperren, wenn die von den Drucksensoren (71, 73) gemessenen Drücke angenähert gleich sind.

15. Regelsystem nach Anspruch 14, dadurch gekennzeichnet, daß die Drucksensoren (71, 73) Arbeitsdrücke in Lenkungsantrieben (67, 69) des Lenkungssystems (66) messen.

16. Regelsystem nach Anspruch 14 oder 15, dadurch gekennzeichnet, daß an dem Drucksensor (71, 73) ein erstes Steuerrelais (70) angeschlossen ist, das in Abhängigkeit von Änderungen im gemessenen Druck zwischen zwei Zuständen schaltet, und daß ein zweites Steuerrelais (84) vorgesehen ist, das auf die Stellung des ersten Steuerrelais (70) anspricht und die Verbindung zwischen einer Spannungsquelle (30) und der Differentialsperre (12) steuert, die das Ausgleichsgetriebe (10) sperrt, wenn sie mit der Spannungsquelle (30) verbunden ist.

17. Regelsystem nach Anspruch 4 und 16, gekennzeichnet durch folgende Merkmale :

a) Ein erster und ein zweiter Drucksensor (71, 73) messen den Flüssigkeitsdruck in einem ersten und zweiten hydraulischen Lenkungsantrieb (67, 69) des Fahrzeuges ;

b) das erste Steuerrelais (70) ist ein normalerweise geschlossenes, doppelt solenoidgesteuertes Relais mit einem Schalter (75), der von einem ersten und zweiten Solenoid (72, 78) gesteuert wird, die jeweils an einen Drucksensor (71, 73) angeschlossen sind, wobei zumindest eines der Solenoide (72, 78) den genannten Schalter (75) öffnet, wenn sich die in den Antrieben (67, 69) gemessenen Drücke um einen vorgegebenen Wert unterscheiden ; und

c) ein zweites, normalerweise geöffnetes Relais (84) ist zwischen das erste Steuerrelais (70) sowie das genannte Hauptrelais (24) geschaltet und schließt das Hauptrelais (24), wenn das erste Steuerrelais (70) schließt.

## Claims

1. Control system (22) for a differential locking mechanism (locking means 12) in a vehicle having at least one differential (10) comprising manually operable means for locking, unlocking, respectively, the differential (10) and a first control unit (24-44) responsive to signals of at least one vehicle function (40-44) and automatically unlocking the differential (10) in response to the indication, exceeding, respectively, of a condition predetermined for said vehicle function (40-44), characterized by said first control unit (24-44) operable only to unlock but not to lock the differential (10), and a second control unit (46) responsive to signals of at least one further vehicle function (62-66) and automatically locking the unlocked differential (10) when exceeding a condition predetermined for said vehicle function (62-66), as far as the vehicle functions of the first control unit (24-44) do not produce a signal for automatically unlocking, whereby the control of the second control unit (46) does not permit the unlocking of a differential (10) being locked before.

2. Control system according to claim 1, characterized in that the first control unit (24-44) is responsive to an application of a vehicle brake (42, 44), unlocking the locking means (12) for the differential (10) when the vehicle is braked.

3. Control system according to claim 1 or 2, characterized in that the first control unit (24-44) is responsive to the vehicle speed (40), unlocking the locking means (12) for the differential (10) when exceeding a predetermined speed.

4. Control unit according to one of the preceding claims, characterized by a main relay (24) coupled between a potential source (30) and the locking means (12), with a normally opened relay switch (26), the locking of which then causes the locking means (12) to lock the differential (10).

5. Control system according to claim 4, characterized in that a manually operable, normally opened, momentary contact switch (38) is coupled between potential source (30) and main relay (24), the locking means (12) only locking the differential (10) in response to the closing of said contact switch (38).

6. Control system according to claim 4 or 5, characterized in that a sensor (40, 42, 44) is provided for each vehicle function (40-44) to which the first control unit (24-44) is responsive, said sensor acts on an associated switch (32, 34, 36), these switches (32, 34, 36) being normally closed and coupled in series between the potential source (30) and the main relay (24).

7. Control system according to one of the preceding claims, characterized in that the second control unit (46) is responsive to a predetermined condition of a steering system (66) of the vehicle.

8. Control system according to claims 4 and 7, characterized in that the second control unit (46) comprises a steering-responsive switch (60) coupled between potential source (30) and main relay (24) and operable only to close the relay switch (26) in response to said predetermined condition, the locking means (12) locking the differential (10) only when connected to the potential source (30).

9. Control system according to claim 8, characterized in that a manually operable on/off-switch (48) is coupled between potential source (30) and the steering-responsive switch (60), the operation of said switch (48) prevents closing of the relay switch (26) in response to the operation of the steering-responsive switch (60).

10. Control system according to one of the preceding claims, characterized in that the second control unit (46) is responsive to vehicle wheel slip.

11. Control system according to claims 8 and 10, characterized in that the second control unit (46) comprises a vehicle wheel slip sensor (64) as well as a slip-responsive switch (58) coupled in series with the steering-responsive switch (60) and operable to prevent locking of the differential (10) when sensed wheel slippage is less than a predetermined amount.

12. Control system according to one of the preceding claims, characterized in that the second control unit (46) is responsive to draft forces applied to the vehicle.

13. Control system according to claims 11 and 12, characterized in that the second control unit (46) comprises a draft sensor (62) as well as a draft-responsive switch (56) coupled in series with the steering-responsive switch (60) as well as the slip-responsive switch (58) and operable to prevent locking of the differential (10) when sensed draft force is below a predetermined amount.

14. Control system according to one of the preceding claims, characterized in that the second control unit (46) comprises pressure sensors (71, 73) for sensing fluid pressures in the hydraulically operated steering system (66) of the vehicle and being coupled to control elements (72, 78) coupled to the locking means (12) for locking the differential (10) when pressures sensed by the pressure sensors (71, 73) are substantially equal.

15. Control system according to claim 14, characterized in that the pressure sensors (71, 73) sense working pressures in steering actuators (67, 69) of the steering system (66).

16. Control system according to claim 14 or 15, characterized in that a first control relay (70) is coupled to the pressure sensor (71, 73) and changing between first and second states in response to changes in the sensed pressure and further characterized by a second control relay (84) responsive to the position of the first control relay (70) to control the communication between a potential source (30) and the locking means (12) locking the differential (10) when communicated with the potential source (30).

17. Control system according to claims 4 and 16, characterized by the following features :

a) first and second pressure sensors (71, 73), sensing the fluid pressure in a first and second hydraulically-operated steering actuator (67, 69) of the vehicle ;

b) said first control relay (70) being a normally closed dual solenoid-controlled relay with a switch (75) controlled by first and second solenoids (72, 78), each solenoid being coupled to one of the pressure sensors (71, 73), at least one of said solenoids (72, 78) opening said switch (75) when the pressures sensed in the actuators (67, 69) are unbalanced by a predetermined amount ; and

c) a second normally opened relay (84) is coupled between the first control relay (70) and said main relay (24) and operable to close said main relay (24) in response to closing of said first control relay (70).

## Revendications

1. Système de réglage (22) pour un dispositif de blocage de différentiel (12) dans un véhicule équipé d'au moins un différentiel (10), comportant un dispositif actionnable manuellement pour bloquer ou débloquer le différentiel (10) et comportant un premier ensemble de commande (24-44) qui réagit à des signaux d'au moins une fonction du véhicule (40-44) et débloque automatiquement le différentiel (10) lors de l'indication ou du dépassement d'une valeur prédéterminée pour cette fonction (40-44) du véhicule, caractérisé en ce que le premier ensemble de commande (24-44) peut exclusivement effectuer un déblocage, mais pas un blocage du différentiel (10), et en ce qu'un second ensemble de commande (46) réagit à des signaux d'au moins une autre fonction (62-66) du véhicule et bloque automatiquement le différentiel débloqué (10), lors du dépassement d'une valeur prédéterminée pour cette fonction (62-66) du véhicule, dans la mesure où les fonctions du véhicule du premier ensemble de commande (24-44) n'engendrent pas de signal de déblocage automatique, le circuit du second ensemble de commande (46) ne permettant pas le déblocage d'un différentiel (10) bloqué précédemment.

2. Système de réglage suivant la revendication 1, caractérisé en ce que le premier ensemble de commande (24-44) réagit à un actionnement d'un frein (42, 44) du véhicule et débloque le dispositif de blocage de différentiel (12) pour le différentiel (10), lors du freinage du véhicule.

3. Système de réglage suivant la revendication 1 ou 2, caractérisé en ce que le premier ensemble de commande (24-44) réagit à la vitesse (40) du véhicule et débloque le dispositif de blocage de différentiel (12) pour le différentiel (10) lors du dépassement d'une vitesse prédéterminée.

4. Système de réglage suivant l'une des revendications précédentes, caractérisé par un relais principal (24) monté entre une source de tension (30) et le dispositif de blocage de différentiel (12), comportant un contacteur de relais (26) normalement ouvert, dont la fermeture agit sur le dispositif de blocage de différentiel (12) qui bloque alors le différentiel (10).

5. Système de réglage suivant la revendication 4, caractérisé en ce qu'un contacteur ou commutateur à fermeture momentanée (38) normalement ouvert, à actionner manuellement, dont la fermeture provoque seulement un blocage du différentiel (10) par le dispositif de blocage de différentiel (12), est monté entre la source de tension (30) et le relais principal (24).

6. Système de réglage suivant la revendication 4 ou 5, caractérisé en ce que pour chaque fonction (40-44) du véhicule à laquelle le premier ensemble de commande (24-44) réagit, il est prévu un capteur (40, 42, 44), qui agit sur un commutateur (32, 34, 36) qui lui correspond, ces commutateurs (32, 34, 36) normalement fermés étant montés en série entre la source de tension (30) et le relais principal (24).

7. Système de réglage suivant l'une des revendications précédentes, caractérisé en ce que le second ensemble de commande (46) réagit à une condition prédéterminée d'un système de direction (66) du véhicule.

8. Système de réglage suivant les revendications 4 et 7, caractérisé en ce que le second ensemble de commande (46) comporte un commutateur (60) réagissant à la direction, qui est monté entre la source de tension (30) et le relais principal (24) et, lors de la réaction à une condition prédéterminée, ferme seulement le contacteur de relais (26), le dispositif de blocage de différentiel (12) bloquant le différentiel (10) seulement lorsqu'il est branché sur la source de tension (30).

9. Système de réglage selon la revendication 8, caractérisé en ce qu'il est monté entre la source de tension (30) et le commutateur (60) réagissant à la direction un commutateur marche-arrêt (48) à actionner manuellement, dont l'actionnement empêche une fermeture du contacteur de relais (26) en conséquence de l'actionnement du commutateur (60) réagissant à la direction.

10. Système de réglage suivant l'une des revendications précédentes, caractérisé en ce que le second ensemble de commande (46) réagit au patinage d'une roue du véhicule.

11. Système de réglage suivant les revendications 8 et 10, caractérisé en ce que le second ensemble de commande (46) comporte un capteur de patinage (64) pour les roues du véhicule, ainsi qu'un commutateur (58) réagissant au patinage, qui est monté en série avec le commutateur (60) réagissant à la direction et empêche, lorsqu'il est actionné, un blocage du différentiel (10), lorsque le patinage mesuré est inférieur à une valeur prédéterminée.

12. Système de réglage suivant l'une des revendications précédentes, caractérisé en ce que le second ensemble de commande (46) réagit à des forces de traction qui sont exercées sur le véhicule.

13. Système de réglage suivant les revendications 11 et 12, caractérisé en ce que le second ensemble de commande (46) comporte un capteur de forces de traction (62), ainsi qu'un commutateur (56) réagissant aux forces de traction, qui est monté en série avec les commutateurs (60, 58) réagissant à la direction ainsi qu'au patinage, et empêche, lorsqu'il est actionné, un blocage du différentiel (10), lorsque la force de traction mesurée est inférieure à une valeur prédéterminée.

14. Système de réglage suivant l'une des revendications précédentes, caractérisé en ce que le second ensemble de commande (46) comporte des capteurs de pression (71, 73) qui mesurent des pressions de liquide dans le système de direction hydraulique (66) du véhicule et sont reliés à des éléments de commande (72, 78) qui sont eux-mêmes reliés au dispositif de blocage de différentiel (12) et bloquent le différentiel (10) lorsque les pressions mesurées par les capteurs de pression (71, 73) sont sensiblement égales.

15. Système de réglage suivant la revendication 14, caractérisé en ce que les capteurs de pression (71, 73) mesurent des pressions de travail dans des mécanismes de commande de direction (67, 69) du système de direction (66).

16. Système de réglage suivant la revendication 14 ou 15, caractérisé en ce qu'un premier relais de commande (70) est relié au capteur de pression (71, 73) et commute entre deux états en fonction de variations de la pression mesurée, et en ce qu'il est prévu un second relais de commande (84) qui réagit à la position du premier relais de commande (70) et commande la liaison entre une source de tension (30) et le dispositif de blocage de différentiel (12) qui bloque le différentiel (10) lorsqu'il est relié à la source de tension (30).

17. Système de réglage suivant les revendications 4 et 16, caractérisé par les caractéristiques suivantes :

a) un premier capteur de pression (71) et un second capteur de pression (73) mesurent la pression de liquide dans un premier mécanisme de commande de direction hydraulique (67) et un second mécanisme de commande de direction hydraulique (69) du véhicule ;

b) le premier relais de commande (70) est un relais normalement fermé à double commande par solénoïde comportant un contacteur (75) qui est commandé par un premier solénoïde (72) et un second solénoïde (78), qui sont reliés chacun à un capteur de pression (71, 73), l'un au moins des solénoïdes (72, 78) ouvrant ledit commutateur (75), lorsque les pressions mesurées dans les mécanismes de commande (67, 69) diffèrent d'une valeur prédéterminée ; et

c) un second relais (84) normalement ouvert est monté entre le premier relais de commande (70) et ledit relais principal (24), et ferme le relais principal (24) lorsque le premier relais de commande (70) se ferme.

FIG. 1

FIG. 2